# EUROPEAN PATENT SPECIFICATION

(11) **EP 4 287 136 B1**
(45) Date of publication and mention of the grant of the patent: **29.07.2026**
(21) Application number: 22382532.4
(22) Date of filing: 01.06.2022
(51) Int. Cl.: G06V 10/10, G06V 10/82, G06V 40/145, G06V 40/14

(54) **SYSTEM OF VEIN LOCATION FOR MEDICAL INTERVENTIONS AND BIOMETRIC RECOGNITION USING MOBILE DEVICES**
VENENLOKALISIERUNGSSYSTEM FÜR MEDIZINISCHE EINGRIFFE UND BIOMETRISCHE ERKENNUNG MIT MOBILEN VORRICHTUNGEN
SYSTÈME DE LOCALISATION DE VEINE POUR INTERVENTIONS MÉDICALES ET RECONNAISSANCE BIOMÉTRIQUE À L'AIDE DE DISPOSITIFS MOBILES

(43) Date of publication of application: 06.12.2023
(73) Proprietor: Universidad Carlos III de Madrid, 28919 Leganés - Madrid (ES)
(72) Inventor: GARCÍA MARTÍN, Raúl, 28919 LEGANÉS (Madrid) (ES); SÁNCHEZ REÍLLO, Raúl, 28919 LEGANÉS (Madrid) (ES)
(74) Representative: Herrero & Asociados, S.L.

(56) References cited:
- AI DANNI ET AL: "Augmented reality based real-time subcutaneous vein imaging system", vol. 7, no. 7, 13 June 2016 (2016-06-13), United States, pages 2565, XP055976025, ISSN: 2156-7085, Retrieved from the Internet <URL:https://opg.optica.org/DirectPDFAccess/79598CF3-C07B-4EAA-872ED2EBE0439B6C_344709/boe-7-7-2565.pdf?da=1&id=344709&seq=0&mobile=no> DOI: 10.1364/BOE.7.002565
- SIMON JURIC ET AL: "Towards a Low-Cost Mobile Subcutaneous Vein Detection Solution Using Near-Infrared Spectroscopy", THE SCIENTIFIC WORLD JOURNAL, vol. 31, no. 6, 1 January 2014 (2014-01-01), pages 347 - 15, XP055323899, ISSN: 2356-6140, DOI: 10.1155/2014/365902
- LANGR JAKUB ET AL: "GANs in Action: Deep learning with Generative Adversarial Networks", ONLINE BOOK, CH.4.2, 1 January 2020 (2020-01-01), XP055976047, Retrieved from the Internet <URL:https://livebook.manning.com/book/gans-in-action/gans-in-action-deep-learning-with-generative-adversarial-networks/>

## Description

### Field of the invention

The present invention has its application within the medical information processing systems and specifically relates to medical image interpretation using Artificial Intelligence.

More particularly, the present invention refers to a system for locating veins in a clinical subject and vascular biometric recognition through a mobile device.

### Background of the invention

Healthcare professionals find serious issues locating venous lines in blood extractions or any vein access surgeries, e.g., blood transfusions, medicine vein injections, or epidural administration. This is a prevalent problem that usually affects children and overweight people with excess adipose tissue that hinders vein visualization. This issue frequently supposes several needle puncture attempts resulting in increased pain for patients usually involved in a complex disease situation.

In order to assist nurses with this task, there are systems that use a visible and infrared light projection device to make the external veins in patients' arms more visible, but the existing systems do not consist of very portable and maneuverable solutions integrable into a mobile device such as a smartphone. Also, these systems cannot provide any extra information on the most efficient and less painful area for nurses to puncture.

Biometric security systems provide automatic human authentication and verification using unique physical and behavioural patterns. Fingerprint and facial recognition are the most popular biometric modalities. Nevertheless, it is also viable to identify a person by the vascularity of his fingers, palm, wrist, and dorsal palm.

Further examples of existing solutions for vascular biometric recognition are listed below.

US2005/0148876A1 describes an individual recognition device that identifies an individual not only by detecting an individual identification number, but also by detecting bodily characteristics of an individual, more specifically, an image of blood vessels of a hand of the individual. In order to image veins of the hand in a contactless way, the individual identification system uses an imaging device which is comprised of a position/direction/shape guiding unit for instructing the user to hold up his/her hand, irradiating units for irradiating the hand with near-infrared radiation, and imaging units for producing an image by the near-infrared radiation. The individual recognition device identifies a user by comparing the blood-vessel image extracted from the produced image with a registered blood-vessel image stored for the user.

US2011/0222740A1 describes a finger vein authentication unit for performing biometric authentication by capturing a finger vein pattern from an image pickup window by an infrared camera using near-infrared light. The infrared camera detects the finger contour data while a touch sensor, mounted in a fingertip placement part provided on the outside of the image pickup window, detects the fingertip shape. From the data of the position and shape of the fingertip, a turn of the finger around the optical axis of the camera as a center, a turn of the finger around the finger as an axis, and a positional deviation of the finger are detected. This solves problems such that a turn of a finger around the finger as an axis cannot be detected from an image of the finger, a finger cannot be placed normally because the nail is caught in a dent portion, and an image of the contour of a finger cannot be obtained when using an image pickup window which is narrower than a finger and is completely closed with a finger so that a turn of a finger cannot be detected from the counter.

SIMON JURIC ET AL: "Towards a Low-Cost Mobile Subcutaneous Vein Detection Solution Using Near-Infrared Spectroscopy", THE SCIENTIFIC WORLD JOURNAL, vol. 31, no. 6, 1 January 2014 (2014-01-01), pages 347-15, ISSN: 2356-6140, DOI: 10.1155/2014/365902 reviews the current state of near-infrared spectroscopy for subcutaneous vein detection, evaluates commercial and low-cost systems, and identifies both their clinical limitations and future research directions for developing effective, affordable mobile health solutions.

Therefore, there is a need in the state of the art for providing a portable and maneuverable device of reduced size, universally integrable into any mobile device, with facilities for automatic vein location and vascular recognition.

### Summary of the invention

The present invention solves the aforementioned problems and overcomes previously explained state-of-art work limitations by providing a vein finder and a vein biometric recognition system based on Ultra-High-Definition (UHD) near-infrared cameras with autofocus capabilities and various diffuse near-infrared spotlights, which can be integrated into any mobile device (smartphones, tablets, laptops, wearable gadgets,...) by means of a Universal Serial Bus (USB) interface, which, together with its small size, makes the system very easy to handle. The portable system can display and record images of the external venous tissues in the mobile device, and the (static or dynamic) images/videos obtained by near-infrared reflection are used for medical vein access and contactless vascular biometric recognition. The acquired near-infrared images/videos are processed using Artificial Intelligence methods that perform an Ultra-HD three-dimensional (3D) vascular reconstruction for automatic biometric recognition and help healthcare professionals find vein lines, showing the least painful puncture area.

The proposed system only emits near-infrared light, whose radiation is reflected by the skin and the venous tissues and captured by one or two high-definition near-infrared cameras instead of projecting visible light. More particularly, the system can provide a three-dimensional (3D) vascular biometric recognition using two near-infrared cameras.

The present invention can be applied to humans and even animals.

The present invention refers to a system for locating veins defined in the appended claims.

The main components of the proposed system are: a processing unit, one/two Ultra-HD autofocus infrared cameras, two Time-of-Flight (ToF) pulsed LED lights, and a USB interface to be integrated into any mobile device. The processing unit uses Artificial Intelligence (AI) configured, for example, for the following applications: i) a universal integrable vascular visualizer to facilitate the work of healthcare professionals in any human/animal external vein puncture or surgery, and ii) a universal integrable vascular recognition system for secure biometric identification of the veins of the wrist, palm, and hand dorsal on any mobile device, to easily verify users' identity in any mass event or online payment.

The system in accordance with the above-described aspects of the invention has a number of advantages with respect to the aforementioned prior art, which can be summarized as follows:
- The present invention constitutes a contactless system with a hygienic person-device interaction and real-time performance, unlike most of the existing human vascular biometric recognition systems (which are not contactless systems, i.e., they are not hygienic solutions in mass access control, e.g., airports, stadiums, business entrances, etc.). The hardware of the system allows the user to capture Ultra-High-Definition (UHD) vein images/videos, which means a possibly higher biometric performance.
- The system hardware can integrate one or two High-Definition (HD) autofocus near-infrared cameras to perform 3D vein reconstruction and identification by combining two technologies in the near-infrared spectrum: two autofocus near-infrared cameras and a pulsed LED light. It is known that a 3D space reconstruction can be performed by using a single camera and a pulsed LED light or Time-of-Flight, or by using a stereo camera pair, but not by this technology combination (combining two independent 3D reconstruction techniques: an autofocus infrared stereo pair and an autofocus infrared camera that, along with a pulsed LED light, works as a ToF sensor) and the application of Deep Learning algorithms to provide high-precision 3D vein reconstruction under most light conditions. This near-infrared Stereo Vision pair is able to measure distances under different light conditions, even at night. In addition, the autofocus feature allows users to easily place the region of interest (i.e., hand palm, dorsal palm, or wrist) facing the device for each identification attempt. Furthermore, the mobile device screens allow the system to provide real-time feedback to users in the recognition process.
- The use of the latest Artificial Intelligence (AI) methods, more specifically, Supervised Deep Learning methods, to process and adapt the captured infrared images/videos allows the system software to analyze the images in real-time in order to recognize people automatically.
- The use of a Universal Serial Bus (USB) interface allows the integration of the presented system into any mobile device (e.g., smartphones, tablets, laptops, desktop computers, and embedded systems) and makes the system entirely portable. Also, the USB interface allows the system to integrate with the posterior imaging Artificial Intelligence and Big Data analysis that state-of-the-art solutions do not include.
- The proposed system reduces patients' pain, helping health assistants to find veins easily in any vein puncture surgery. Furthermore, the system allows the recording and storing of the entire puncture process so that, using this information, the implemented Artificial Intelligence can find each patient's optimum, painless area.
- The present invention allows vascular biometric recognition modality using just the wrist area. For example, an operator in a mass access control, e.g., a stadium entrance, can verify the assistants' identity by simply checking their wrists through the operator's smartphone without contacting the skin, instead of carrying less portable systems, a laptop, and a cable.
- The portability, manoeuvrability, and integrability of the system are also excellent points for the veterinary field.

These and other advantages will be apparent in the light of the detailed description of the invention.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:
Figure 1 shows a block diagram of the vein finder system and its integration along with different mobile devices, according to a preferred embodiment of the invention.
Figure 2 shows an example of operating the system through a smartphone for vein location and vascular biometric recognition using the clinical subjet's wrist.
Figure 3 shows a flow diagram of the steps performed by a processing unit of the system for vein location, according to a possible embodiment of the invention.
Figure 4 shows a flow diagram of the steps performed by a processing unit of the system for vascular biometric recognition, according to another possible embodiment of the invention.
Figure 5 shows a block diagram of a Convolutional Generative Adversarial Network for the vein image preprocessing and enhancement, according to a preferred embodiment of the invention.
Figure 6 shows a block diagram of the Convolutional Generative Adversarial Network for two-dimensional vein image processing, according to a possible embodiment of the invention using only one camera.
Figure 7 shows a block diagram of the Convolutional Generative Adversarial Network for three-dimensional vein image processing, according to a possible embodiment of the invention using a pair of cameras.

### Preferred embodiment of the invention

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

A preferred embodiment of the invention refers to a complete system based on at least one near-infrared camera (preferably, one or two near-infrared cameras) with Artificial Intelligence and Stereo Vision capabilities, integrated into a mobile device through a Universal Serial Bus (USB) interface, which provides two functionalities:
1) Intelligent vein finder for clinical applications and integrable on any mobile device.
2) Vascular biometric recognition security for any mobile device.

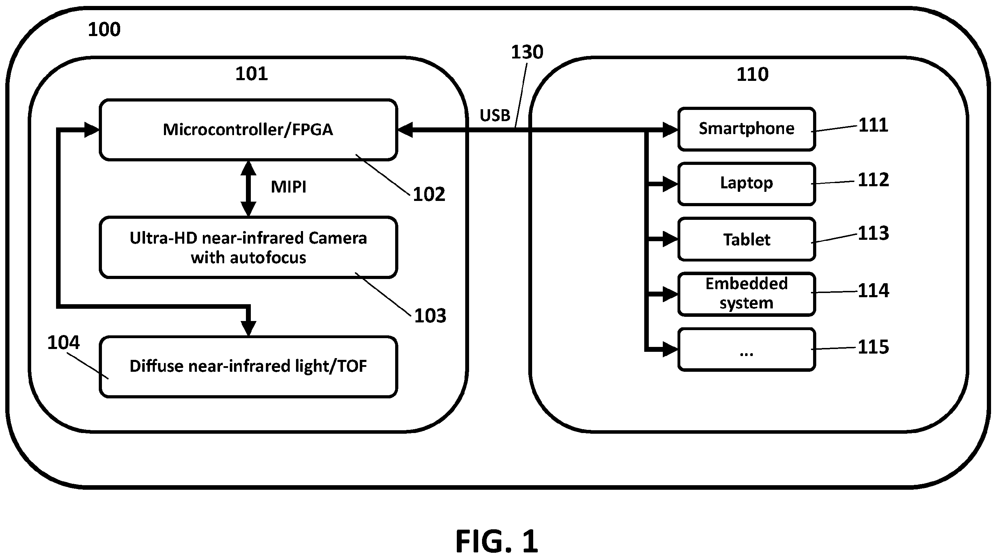

Figure 1 shows the architecture in blocks of the proposed system (100), according to a possible embodiment (in its single-camera version), to work as a vein finder or detector for clinical applications (vascular biometric recognition included). Similarly, in another possible embodiment (dual-camera version), the system (100) comprises a pair of near-infrared cameras to build 3D vein reconstruction models.

The system (100) comprises a contactless device (101) with the, one or two, near-infrared cameras (103). By using a Universal Serial Bus, USB, interface (130), the contactless device (101) can be connected with at least one mobile device (110), which may be a smartphone (111), a laptop (112), a tablet (113), an embedded system (114) (e.g., ATM: Automated Teller Machine, automotive system or home security systems) and/or any portable smart device (115) such as a wearable gadget (e.g., smart goggles). Each near-infrared camera (103) has Ultra-High-Definition and autofocus capabilities. In addition, the contactless device (101) comprises two diffuse pulsed near-infrared light-emitting diodes or LED spotlights (104). The near-infrared camera(s) (103) and the near-infrared pulsed light(s) (104) communicate with a processing unit (102), which can be implemented, for example, by a microcontroller or a Field-Programmable Gate Array, FPGA. For example, a communication interface following the mobile-interface specifications by MIPI (Mobile Industry Processor Interface) can be used to exchange information between the processing unit (102) and each near-infrared camera (103). The contactless device (101) employs Time-of-Flight, ToF, techniques to resolve the distance between the camera (103) and the subject for each point of the image by measuring the round trip time of an artificial light signal provided by the LED spotlights (104). The processing unit (102) executes the Al-based software algorithms in charge of infrared image processing and enhancement, vein visualization, real-time guidance of health professionals, and automatic vascular biometric recognition.

The near-infrared camera (103) can capture the infrared radiation emitted by the diffuse near-infrared pulsed light (104) and, at the same time, reflected by the human/animal tissues. If the contactless device (101) includes an infrared stereo pair of cameras (103), the 3D vein reconstruction is achieved by the Al algorithms. This Stereo Vision is combined and reinforced by the ToF of each camera (103) along with the infrared pulsed spotlight (104). In addition, the single near-infrared camera or cameras (103) of the stereo pair include a Voice Coil Motor, VCM, which allows the autofocus process with the physical lens movement. Preferably, the near-infrared camera (103) is an Ultra-HD camera, i.e., 3840×2160 resolution video/images, 2160 pixels, providing a High-Quality vein visualization/recognition. If desired, it can provide 16:9 reduced standard resolutions: Full HD (1920x1080, 1080 pixels) and HD (1280x720, 720 pixels); and 4:3 reduced standard resolutions: VGA (640x480, 480 pixels).

The 30, 60, and 120 FPS (Frames Per Second) video frame rates support the fast real-time performance. The infrared videos and images are transferred from the cameras (103) to the processing unit (102), preferably via MIPI-CSI2 (Mobile Industry Processor Interface - Camera Serial Interface 2) interface. The near-infrared pulsed light (104) is generated by two pulsed LEDs in charge of lighting the scenes captured by the cameras (103) and accomplishing the ToF procedure. Both LED spotlights (104) provide a wide-angle diffused light to obtain high-quality images under several environmental light conditions.

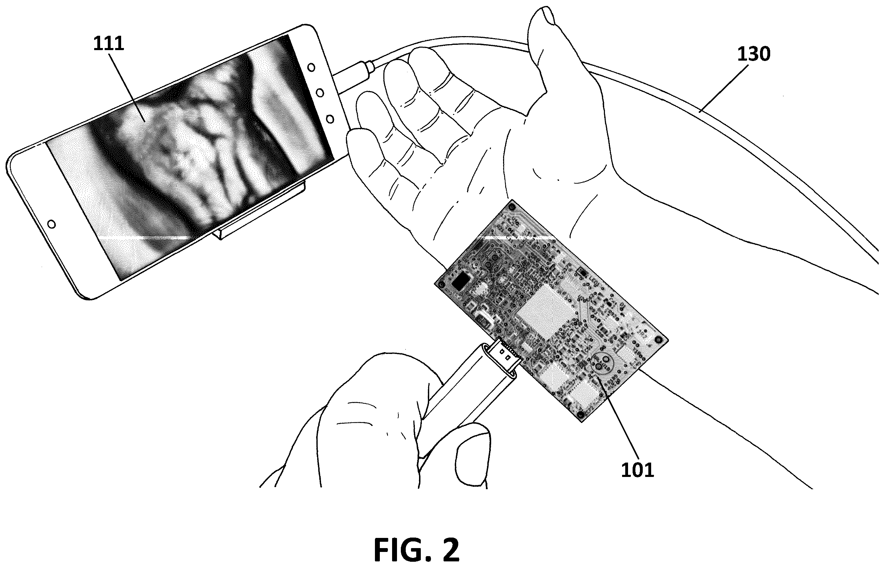

Figure 2 shows the system (100) comprising the contactless device (101) plugged into a mobile device (110), which is a smartphone (111), through a USB interface (130), proving its universal integrability, reduced size design and maneuverability for clinical applications. The standard male/female USB connector is used working in Full Speed (USB 1.1, 12 Mbps), Hi-Speed (USB 2.0, 480 Mbps), or SuperSpeed (USB 3.0, up to 20 Gbps) standard modes and offers an easy way to integrate the contactless device (101) of the system (100) into any mobile device (110). The hardware of the contactless device (101) can be mechanically (as specified in IEC 61587 standard) and electromagnetically (as specified in IEC 61000 standard) protected with an aluminum case or housing. In addition, according to the IEC 60529 standard, it is an IP67 shield that also protects the hardware against dust and water.

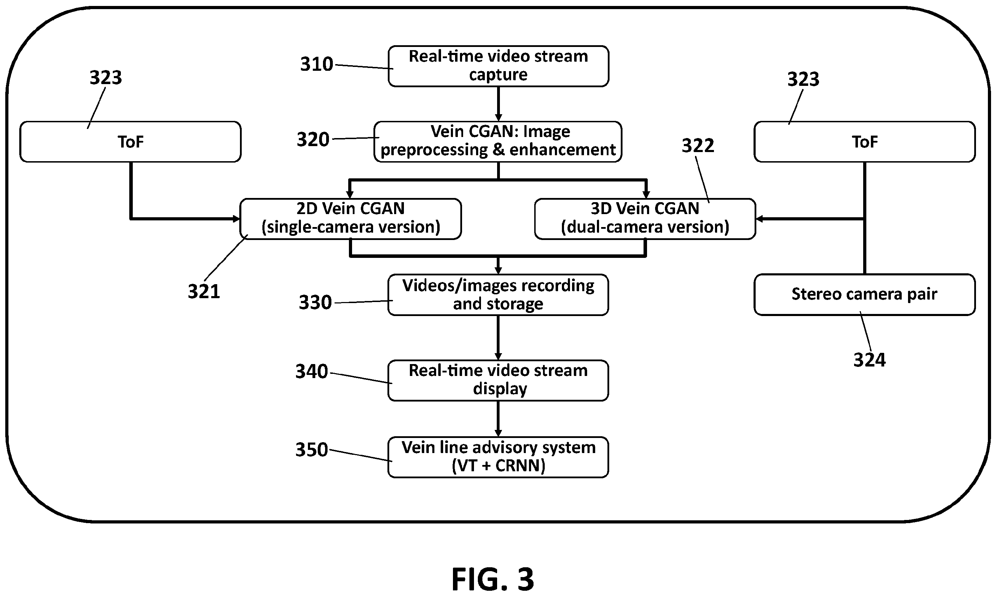

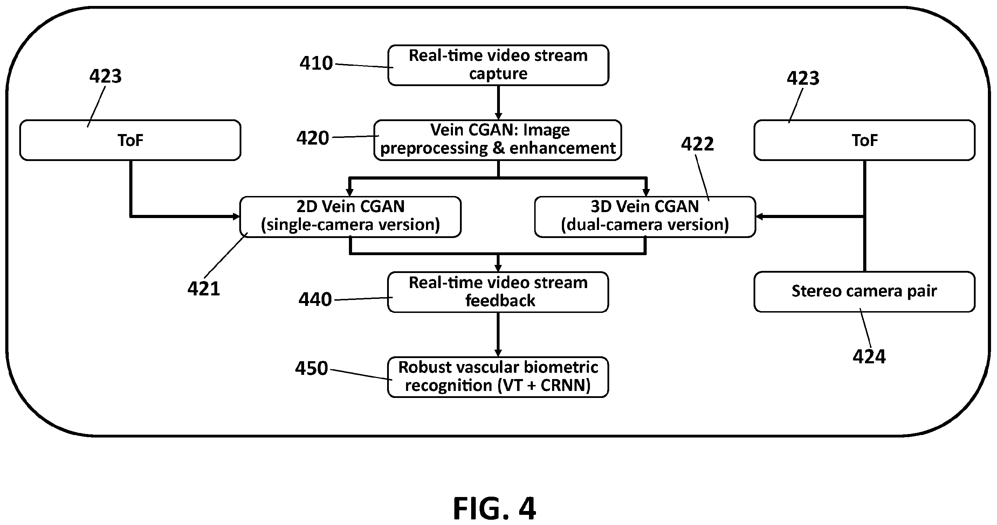

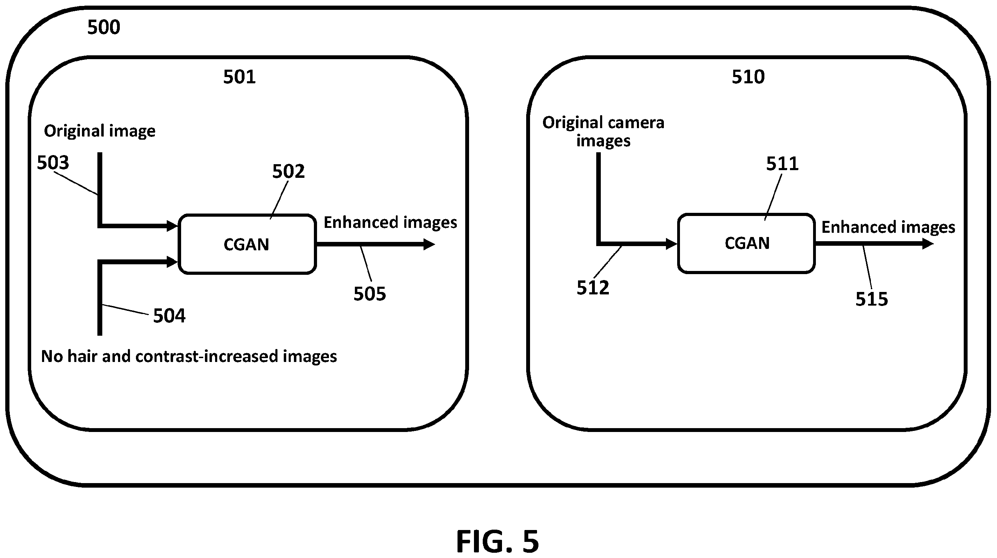

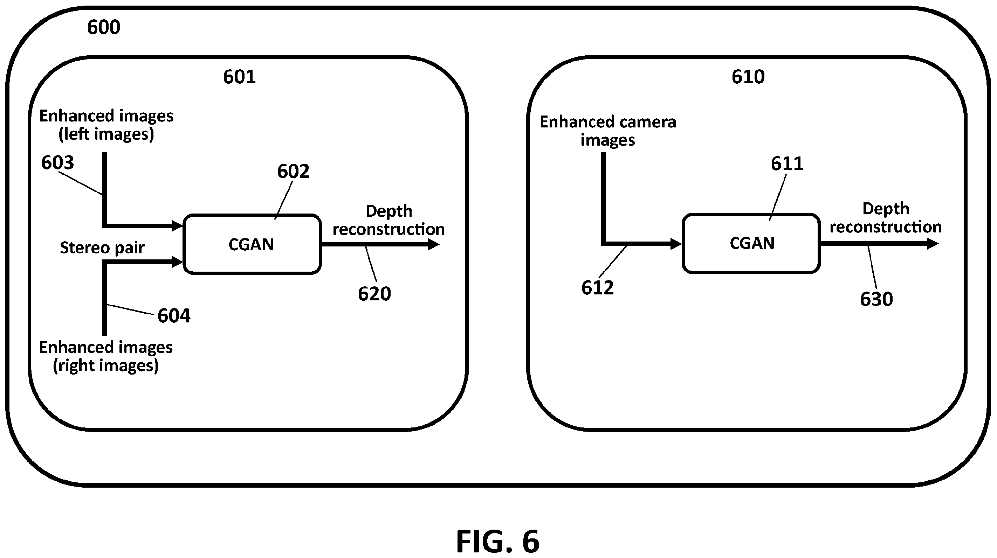

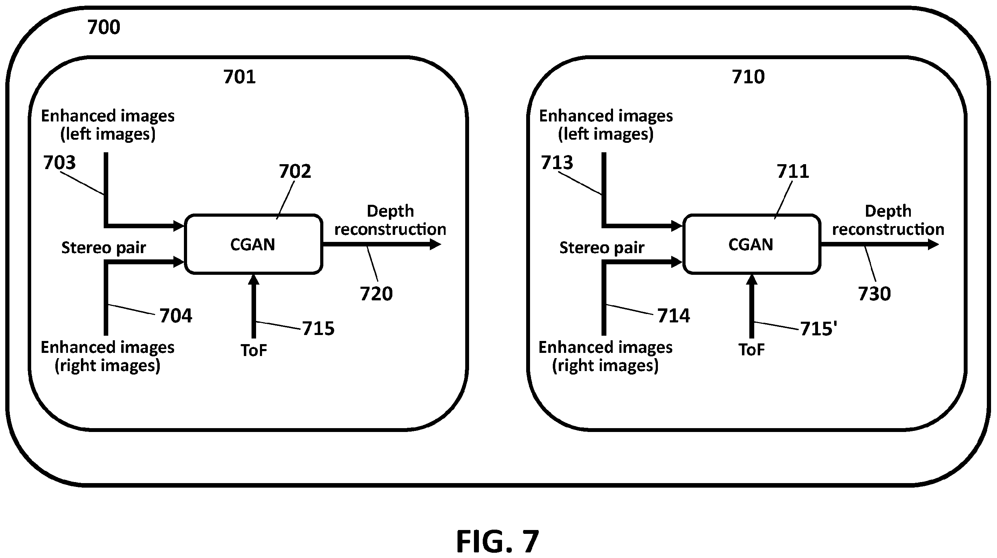

Figures 3-4 show the main steps performed by the processing unit (102) of the system (100) to obtain information from the contactless device (101) and processing it to obtain (clinical and/or biometric) results and deliver them to the connected mobile device (110) for the presentation of the obtained results. For this general purpose, a software module is integrated into the processing unit (102). More specifically, Figure 3 indicates the steps performed for vein detection/location, and Figure 4 illustrates the steps for vascular biometric recognition; as shown, the main difference is that, when operating as a vein finder, the system (100) can record and store the images (videos, included) obtained by the Al vision software integrated into the processing unit (102), while the system (100) rightly delivers video streams in real-time for vascular biometric recognition. The tasks performed by the processing unit (102) shown in Figures 3-4, respectively, for vein location and vascular biometric recognition are as follows:
- Receiving (310, 410) the images captured in real-time by the near-infrared cameras (103): Firstly, the processing unit (102) manages the captured images (preferably, video streams) received from the near-infrared cameras (103) in 2160p, 1080p, 720p, or 480p resolutions at 30, 60, or 120 FPS. The autofocus capability of the near-infrared cameras (103) combined with the diffuse infrared light (104) from the LEDs results in Ultra-High-Quality images.
- Image preprocessing and enhancement (320, 420) by a Convolutional Generative Adversarial Network, CGAN, which applies Artificial Intelligence algorithms for 2-dimensional image processing (321, 421), if only one near-infrared camera (103) is used (single-camera version) to capture the images in the previous step, or for 3-dimensional image processing (322, 422), if two near-infrared cameras (103) are used (dual camera version). After receiving (310, 410) the infrared images, the processing unit (102) processes them to obtain images of vein patterns and extracts the most relevant vein patterns as the obtained images/patterns are filtered by blood flow, which is determined from the vein section information estimated by the CGAN. The 3D/depth information allows calculating the vein section, defined as an ideal circular section, and estimating the blood flow. In order to obtain the vein patterns from the images, the Al algorithm uses the experience previously acquired through Big Data (thousands of vein infrared images) and Deep Learning methods. The processing unit (102) incorporates a CGAN algorithm (500) also to improve vein pattern visualization and, additionally, remove potential occlusions caused by arm/wrist hairs. This Vein CGAN algorithm (500) follows a Conditional Generative Adversarial Network structure with an image-to-image technique, as shown in Figure 5. For this purpose, the algorithm is trained with two different image datasets: original images, images with shaved arm/wrist hairs, and images with artificial higher-level contrast. After the training, the algorithm is able to obtain enhanced vein images with high contrast between vascular patterns and the surrounding skin and without potential occlusions caused by arm/wrist hairs. The contrast between vascular lines and surrounding tissue in the image to be visualized is increased to help healthcare professionals locate the veins without difficulty when the healthcare professional uses the system (100) as a vein finder. The contrast between vascular lines and surrounding tissue is also increased for vascular biometric recognition to help the next Artificial Intelligence process identify the vein paths. Another CGAN architecture (600) is in charge of 2D vein reconstruction, as shown in Figure 6. This 2D Vein CGAN algorithm (600) obtains a depth estimation from the original image, and for this purpose, the network is trained with stereo pair images. In the dual camera version, the use of an infrared stereo pair allows a more robust 3D vein pattern vision/reconstruction by another CGAN (700), as shown in Figure 7, using: a) a corresponding pulsed LED light (104) working as a ToF sensor (324, 424), associated with each near-infrared camera (103) of the pair, for range-finding and distance sensing by known Time-of-Flight techniques; b) the real-time dual infrared camera information combined (324, 424) and processed by the Al algorithms based on a 3D-GAN architecture, which allows a 3D Ultra-High-Definition vein generation to achieve a robust, redundant and high-quality vascular biometric recognition in three dimensions, recognizing the depth of each line in detail. The depth visualization of the vein lines helps healthcare professionals visually estimate the blood flow and the best place to puncture a needle.
- Before the visualization of the generated vein patterns in the images, each image/video frame acquired by the (single-one or pair of) infrared camera/s (103) can be recorded and stored (330) to use the previously acquired data in the iterative Al algorithms, in order to continuously reduce patients' pain by teaching the Al the optimum and painless puncture area.
- Presentation or display (340, 440) of the resulting images in real-time: The resulting 2D or 3D rendering is shown on the mobile device (110) used in the system (100). The 2D (single-camera version) or 3D (stereo pair version) information can be displayed in real-time as near-infrared images or video streams by using the graphic user interface provided by the mobile device (110). For example, if the system (100) is used to find/locate veins for clinical applications, the resulting images can be displayed on Augmented Reality (AR)/Mixed Reality (MR) glasses/goggles or the display of tablets/smartphones showing the estimated blood flow for each vein. The images displayed on the screen of the mobile device (110) provide users of the systems (100) with feedback that can be used at each security recognition attempt in biometric applications.
- Decision making by the Artificial Intelligence: The last mission of the Al algorithms is to aid the user, the health professional, or the operator of the system (100) in the goal of the application. An advisory unit (350, 450) comprising Al (more particularly, Deep Learning) based on a Vision Transformer (VT) and a CRNN (Convolutional Recurrent Neural Network) video algorithm is integrated into the processing unit (102). For vein location, the advisory unit (350) is configured to indicate the best puncture area for each patient based on what the Al has previously learned from both the specific patient and the group as a whole, helping the nurses in executing the puncture on painless areas for clinical analysis or healthcare professionals in any human/animal external vein surgery providing optimal (in terms of blood flow) puncture areas in real-time. This advisory unit (450) is configured to recognize subjects based on the vascular biometric reconstruction.

Figure 5 shows the architecture in blocks of a CGAN (500), here called Vein CGAN, configured to obtain, in real-time, enhanced images (505, 515) of the vascular lines and surrounding tissue, following an image-to-image structure, from the infrared images of the subject's body part captured by each near-infrared camera (103). Figure 5 represents the training stage or part (501), where the network (502) is trained using the raw/original infrared images (503) and similar images without hairs (504), followed by an artificial contrast increase, to obtain the enhanced images (505) as output. After the training, the Vein CGAN in performance mode (510) transforms original camera images (512) into non-hair and high-contrast enhanced images (515) at the final output of the network (511).

Figure 6 shows the architecture in blocks of a CGAN (600), here called 2D Vein CGAN, for the single-camera version. Figure 6 represents the training part (601), where the network (602) is trained using stereo pair infrared images from both the left camera (603) and the right camera (604), being able to obtain 3D reconstructions/estimations of vein depth (620) from a unique input image. After the training, the 2D Vein CGAN (600) in performance mode (610) transforms the enhanced images (612) obtained by using a single near-infrared camera (103) into vein depth estimations (630) at the output of the network (611).

Figure 7 shows the architecture in blocks of a CGAN (700), here called 3D Vein CGAN, for the dual-camera version. Figure 7 represents the training part (701), where the network (702) is trained using stereo pair infrared images from both the left camera (703) and the right camera (704) and the ToF information (715), being able to obtain 3D reconstructions/estimations of vein depth (720) from i) a stereo pair input, ii) a ToF input or iii) both of them at the same time in a redundant and more robust way. After the training, the 3D Vein CGAN (700) in performance mode (710) transforms the enhanced images from both the left camera (713) and the right camera (714) forming the stereo camera pair or ToF information (715') into depth estimations (730) at the output of the network (711).

Note that in this text, the term "comprises" and its derivations (such as "comprising," etc.) should not be understood in an excluding sense, that is, these terms should not be interpreted as excluding the possibility that what is described and defined may include further elements, steps, etc.

## Claims

1. A system (100) for locating veins in a human or animal subject using a mobile device (110), comprising:
- a device (101) pluggable into the mobile device (110) via a universal serial bus interface (130), the device (101) integrating one or two near-infrared cameras (103) for contactless capturing of images of vascular lines and surrounding tissue of a subject's body part in real-time; and
- a processing unit (102) communicated with each near-infrared camera (103), the processing unit (102) being configured to:
- receive (310, 410) the captured images from each near-infrared camera (103),
- preprocess and enhance (320, 420) the received images by a convolutional generative adversarial network, CGAN (500, 600, 700), which applies artificial intelligence for processing two-dimensional images (321, 421), if only one near-infrared camera (103) is used, and three-dimensional images (322, 422), if two near-infrared cameras (103) are used, the CGAN (500, 600, 700) obtaining two-dimensional or three-dimensional images of a vein pattern of the subject's body part;
- send in real-time the obtained images of the vein pattern to be displayed (340, 440) by using a graphic user interface provided by the mobile device (110);
- provide a user of the system (100) with an indication of a result from an advisory unit (350, 450) integrated into the processing unit (102), the advisory unit (350, 450) obtaining the result, which is related to the location of veins in the vein pattern, by using deep learning based on a vision transformer and a convolutional recurrent neural network.

2. The system (100), according to any preceding claim, wherein the device (101) integrates two near-infrared cameras (103) and further comprises two diffuse pulsed near-infrared light-emitting diodes (104) communicated with the near-infrared cameras (103) and the processing unit (102).

3. The system (100), according to claim 2, wherein the CGAN (600, 700) of the processing unit (102) is configured to obtain three-dimensional images of the vein pattern by using each pulsed near-infrared light-emitting diode (104) associated with each near-infrared camera (103) in a time-of-flight sensor (323, 423) and combining the captured images from the two real-time dual infrared cameras to estimate (620, 630, 720, 730) a depth of each vein line in the vein pattern.

4. The system (100), according to claim 3, wherein the processing unit (102) is further configured to filter the obtained images of the vein pattern by flow blood computed using the vein depth/section estimations (620, 630, 720, 730) from the CGAN (600, 700).

5. The system (100), according to any preceding claim, wherein the CGAN (500) of the processing unit (102) is configured to enhance (320, 420) the received images by increasing the contrast between vascular lines and surrounding tissue in the images to be displayed.

6. The system (100), according to claim 5, wherein the CGAN (500) of the processing unit (102) is configured to output non-hair and high-contrast enhanced images (515).

7. The system (100), according to any preceding claim, wherein the processing unit (102) is configured to send the images to be displayed (340, 440) in real-time by using augmented reality or mixed reality displayable by the mobile device (110) or on a screen of the mobile device (110).

8. The system (100), according to any preceding claim, wherein the processing unit (102) is configured to send the images to be displayed (340, 440) by video streaming.

9. The system (100), according to any preceding claim, wherein each near-infrared camera (103) has autofocus and a resolution of 2160 pixels, 1080 pixels, 720 pixels, or 480 pixels at 30 frames per second, 60 frames per second, or 120 FP frames per second.

10. The system (100), according to any preceding claim, wherein the CGAN of the processing unit (102) is configured to use additional infrared images of vein patterns obtained from external Big Data systems.

11. The system (100), according to any preceding claim, wherein the processing unit (102) is further configured to record and store (330) the obtained images to train the deep learning of the advisory unit (350, 450).

12. The system (100), according to claim 9, wherein the advisory unit (350) is configured to indicate a location of a vein puncture for the subject based on the deep learning training from the obtained images of the vein pattern for the subject and a group of subjects, or the advisory unit (450) is configured to indicate an identification of the subjects based on the vascular biometric reconstruction performed by the deep learning training from the obtained images of the vein pattern.

13. The system (100), according to any preceding claim, wherein the mobile device (110) is a smartphone (111), a laptop (112), a tablet (113), a desktop computer, a wearable gadget, or an embedded system (114).

## Patentansprüche

1. System (100) zur Lokalisierung von Venen bei einem menschlichen oder tierischen Subjekt unter Verwendung eines mobilen Geräts (110), umfassend:
- eine Vorrichtung (101), die über eine Universal-Serial-Bus-Schnittstelle (130) an das mobile Gerät (110) angeschlossen werden kann, wobei die Vorrichtung (101) eine oder zwei Nahinfrarotkameras (103) zur berührungslosen Erfassung von Bildern von Gefäßverläufen und umgebendem Gewebes eines Körperteils des Subjekts in Echtzeit integriert; und
- eine Verarbeitungseinheit (102), die mit jeder Nahinfrarotkamera (103) in Kommunikation steht, wobei die Verarbeitungseinheit (102) konfiguriert ist zum:
- Empfangen (310, 410) der erfassten Bilder von jeder Nahinfrarotkamera (103);
- Vorverarbeiten und Verbessern (320, 420) der empfangenen Bilder durch ein konvolutionelles generativadversariales Netzwerk (CGAN) (500, 600, 700), das künstliche Intelligenz zur Verarbeitung von zweidimensionalen Bildern (321, 421) anwendet, wenn nur eine Nahinfrarotkamera (103) verwendet wird, und von dreidimensionalen Bildern (322, 422), wenn zwei Nahinfrarotkameras (103) verwendet werden, wobei das CGAN (500, 600, 700) zweidimensionale oder dreidimensionale Bilder eines Venenmusters des Körperteils des Subjekts erhält;
- Senden der erhaltenen Bilder des Venenmusters in Echtzeit, um sie unter Verwendung einer von dem mobilen Gerät (110) bereitgestellten grafischen Benutzeroberfläche anzuzeigen (340, 440);
- Bereitstellen, für einen Benutzer des Systems (100), eines Hinweises auf ein Ergebnis von einer in die Verarbeitungseinheit (102) integrierten Beratungseinheit (350, 450), wobei die Beratungseinheit (350, 450) das Ergebnis, das sich auf die Position von Venen in dem Venenmuster bezieht, unter Verwendung von Deep Learning auf der Grundlage eines Vision-Transformer und eines konvolutionellen rekurrenten neuronalen Netzwerks erhält.

2. System (100) nach einem der vorhergehenden Ansprüche, wobei die Vorrichtung (101) zwei Nahinfrarotkameras (103) integriert und ferner zwei diffuse gepulste Nahinfrarot-Leuchtdioden (104) umfasst, die mit den Nahinfrarotkameras (103) und der Verarbeitungseinheit (102) in Kommunikation stehen.

3. System (100) nach Anspruch 2, wobei das CGAN (600, 700) der Verarbeitungseinheit (102) konfiguriert ist, dreidimensionale Bilder des Venenmusters zu erhalten, indem jede gepulste Nahinfrarot-Leuchtdiode (104), die jeder Nahinfrarotkamera (103) in einem Lichtlaufzeitsensor (323, 423) zugeordnet ist, verwendet wird und die erfassten Bilder von den beiden Echtzeit-Dual-Infrarotkameras kombiniert werden, um eine Tiefe jeder Venenlinie im Venenmuster zu schätzen (620, 630, 720, 730).

4. System (100) nach Anspruch 3, wobei die Verarbeitungseinheit (102) ferner so konfiguriert ist, dass sie die erhaltenen Bilder des Venenmusters anhand des Blutflusses filtert, der unter Verwendung der Venen-Tiefen- /Querschnittsschätzungen (620, 630, 720, 730) aus dem CGAN (600, 700) berechnet wird.

5. System (100) nach einem der vorhergehenden Ansprüche, wobei das CGAN (500) der Verarbeitungseinheit (102) so konfiguriert ist, dass es die empfangenen Bilder verbessert (320, 420), indem es den Kontrast zwischen Gefäßverläufen und umgebendem Gewebe in den anzuzeigenden Bildern erhöht.

6. System (100) nach Anspruch 5, wobei das CGAN (500) der Verarbeitungseinheit (102) konfiguriert ist, haarfreie und kontrastreich verbesserte Bilder (515) auszugeben.

7. System (100) nach einem der vorhergehenden Ansprüche, wobei die Verarbeitungseinheit (102) so konfiguriert ist, dass sie die anzuzeigenden Bilder (340, 440) in Echtzeit unter Verwendung von Augmented Reality oder Mixed Reality sendet, die auf dem mobilen Gerät (110) oder auf einem Bildschirm des mobilen Geräts (110) angezeigt werden können.

8. System (100) nach einem der vorhergehenden Ansprüche, wobei die Verarbeitungseinheit (102) so konfiguriert ist, dass sie die anzuzeigenden Bilder (340, 440) per Videostreaming sendet.

9. System (100) nach einem der vorhergehenden Ansprüche, wobei jede Nahinfrarotkamera (103) über einen Autofokus und eine Auflösung von 2160 Pixeln, 1080 Pixeln, 720 Pixeln oder 480 Pixeln bei 30 Bildern pro Sekunde, 60 Bildern pro Sekunde oder 120 Bildern pro Sekunde verfügt.

10. System (100) nach einem der vorhergehenden Ansprüche, wobei das CGAN der Verarbeitungseinheit (102) so konfiguriert ist, dass es zusätzliche Infrarotbilder von Venenmustern verwendet, die von externen Big-Data-Systemen bezogen werden.

11. System (100) nach einem der vorhergehenden Ansprüche, wobei die Verarbeitungseinheit (102) ferner so konfiguriert ist, dass sie die erhaltenen Bilder aufzeichnet und speichert (330), um das Deep Learning der Beratungseinheit (350, 450) zu trainieren.

12. System (100) nach Anspruch 9, wobei die Beratungseinheit (350) so konfiguriert ist, dass sie eine Position einer Venenpunktion für das Subjekt auf der Grundlage des Deep-Learning-Trainings anhand der erhaltenen Bilder des Venenmusters für das Subjekt und eine Gruppe von Subjekten anzeigt, oder die Beratungseinheit (450) so konfiguriert ist, dass sie eine Identifizierung der Subjekte auf der Grundlage der vaskulären biometrischen Rekonstruktion anzeigt, die durch das Deep-Learning-Training anhand der erhaltenen Bilder des Venenmusters durchgeführt wurde.

13. System (100) nach einem der vorhergehenden Ansprüche, wobei das mobile Gerät (110) ein Smartphone (111), ein Laptop (112), ein Tablet (113), ein Desktop-Computer, ein Wearable oder ein eingebettetes System (114) ist.

## Revendications

1. Système (100) destiné à localiser des veines chez un sujet humain ou animal à l'aide d'un dispositif mobile (110), **caractérisé en ce qu'**il comprend :
- un dispositif (101) pouvant être connecté à l'appareil mobile (110) via une interface USB (130), le dispositif (101) intégrant une ou deux caméras à infrarouge proche (103) pour la capture sans contact et en temps réel d'images des veines et des tissus environnants d'une partie du corps d'un sujet ; et
- une unité de traitement (102) en communication avec chaque caméra proche infrarouge (103), l'unité de traitement (102) étant configurée pour :
- recevoir (310, 410) les images capturées par chaque caméra proche infrarouge (103),
- prétraiter et améliorer (320, 420) les images reçues à l'aide d'un réseau antagoniste génératif convolutif, CGAN (500, 600, 700), qui utilise l'intelligence artificielle pour traiter des images bidimensionnelles (321, 421), si une seule caméra proche infrarouge (103) est utilisée, et des images tridimensionnelles (322, 422), si deux caméras proches infrarouges (103) sont utilisées, le CGAN (500, 600, 700) obtenant des images bidimensionnelles ou tridimensionnelles d'un réseau veineux de la partie du corps du sujet ;
- envoyer en temps réel les images obtenues du réseau veineux à afficher (340, 440) à l'aide d'une interface utilisateur graphique fournie par le dispositif mobile (110) ;
- fournir à un utilisateur du système (100) une indication d'un résultat provenant d'une unité de conseil (350, 450) intégrée à l'unité de traitement (102), l'unité de conseil (350, 450) obtenant le résultat, qui est lié à l'emplacement des veines dans le réseau veineux, en utilisant l'apprentissage profond basé sur un transformateur de vision et un réseau neuronal récurrent convolutif.

2. Système (100), selon l'une quelconque des revendications précédentes, dans lequel le dispositif (101) intègre deux caméras à infrarouge proche (103) et comprend en outre deux diodes électroluminescentes à infrarouge proche à impulsions diffuses (104) en communication avec les caméras à infrarouge proche (103) et l'unité de traitement (102).

3. Système (100) selon la revendication 2, dans lequel le CGAN (600, 700) de l'unité de traitement (102) est configuré pour obtenir des images tridimensionnelles du réseau veineux en utilisant chaque diode électroluminescente à lumière proche infrarouge pulsée (104) associée à chaque caméra proche infrarouge (103) dans un capteur à temps de vol (323, 423) et en combinant les images capturées par les deux caméras infrarouges doubles en temps réel pour estimer (620, 630, 720, 730) la profondeur de chaque ligne veineuse dans le réseau veineux.

4. Système (100), selon la revendication 3, dans lequel l'unité de traitement (102) est en outre configurée pour filtrer les images obtenues du motif veineux en fonction du débit sanguin calculé à partir des estimations de profondeur/section des veines (620, 630, 720, 730) fournies par le CGAN (600, 700).

5. Système (100), selon l'une quelconque des revendications précédentes, dans lequel le CGAN (500) de l'unité de traitement (102) est configuré pour améliorer (320, 420) les images reçues en augmentant le contraste entre les lignes vasculaires et les tissus environnants dans les images à afficher.

6. Système (100), selon la revendication 5, dans lequel le CGAN (500) de l'unité de traitement (102) est configuré pour produire des images améliorées sans cheveux et à contraste élevé (515).

7. Système (100), selon l'une quelconque des revendications précédentes, dans lequel l'unité de traitement (102) est configurée pour envoyer les images à afficher (340, 440) en temps réel en utilisant la réalité augmentée ou la réalité mixte pouvant être affichée par le dispositif mobile (110) ou sur un écran du dispositif mobile (110).

8. Système (100), selon l'une quelconque des revendications précédentes, dans lequel l'unité de traitement (102) est configurée pour envoyer les images à afficher (340, 440) par streaming vidéo.

9. Système (100), selon l'une quelconque des revendications précédentes, dans lequel chaque caméra proche infrarouge (103) dispose d'un autofocus et d'une résolution de 2160 pixels, 1080 pixels, 720 pixels ou 480 pixels à 30 images par seconde, 60 images par seconde ou 120 images par seconde.

10. Système (100), selon l'une quelconque des revendications précédentes, dans lequel le CGAN de l'unité de traitement (102) est configuré pour utiliser des images infrarouges supplémentaires de motifs veineux obtenues à partir de systèmes de mégadonnées externes.

11. Système (100), selon l'une quelconque des revendications précédentes, dans lequel l'unité de traitement (102) est en outre configurée pour enregistrer et stocker (330) les images obtenues afin d'entraîner l'apprentissage profond de l'unité de conseil (350, 450).

12. Le système (100), selon la revendication 9, dans lequel l'unité de conseil (350) est configurée pour indiquer un emplacement de ponction veineuse pour le sujet sur la base de l'apprentissage profond à partir des images obtenues du motif veineux du sujet et d'un groupe de sujets, ou l'unité de conseil (450) est configurée pour indiquer une identification des sujets sur la base de la reconstruction biométrique vasculaire effectuée par l'apprentissage profond à partir des images obtenues du motif veineux.

13. Système (100), selon l'une quelconque des revendications précédentes, dans lequel le dispositif mobile (110) est un smartphone (111), un ordinateur portable (112), une tablette (113), un ordinateur de bureau, un gadget portable ou un système embarqué (114).
